# FASCICULE DE BREVET EUROPEEN

(11) **EP 4 377 063 B1**
(45) Date de publication et mention de la délivrance du brevet: **21.05.2025**
(21) Numéro de dépôt: 22753682.8
(22) Date de dépôt: 20.07.2022
(51) Int. Cl.: B29C 51/02, B29C 51/14, B29C 51/26, B29C 51/08, B29C 51/30, B29C 51/32, B64D 11/06, B60N 3/00, B29C 51/42, B29K 69/00, B29K 27/06, B29L 31/44, B29L 31/30, B29L 31/00, B29L 9/00, B29K 105/04, B29C 51/12, B29C 51/38, B29C 51/10

(54) **PROCÉDÉ DE FABRICATION D'UNE PIÈCE DE SIÈGE D'AVION**
VERFAHREN ZUR HERSTELLUNG EINES FLUGZEUGSITZTEILS
METHOD FOR MANUFACTURING AN AIRCRAFT SEAT PART

(30) Priorité: 30.07.2021 FR 2108364
(43) Date de publication de la demande: 05.06.2024
(73) Titulaire: Safran Seats, 78370 Plaisir (FR)
(72) Inventeur: CAILLETEAU, Jeremy, 77550 Moissy-Cramayel (FR); LOPES, Antonio, 77550 Moissy-Cramayel (FR)
(74) Mandataire: Marconnet, Sébastien
(86) Numéro de dépôt international: PCT/EP2022/070322
(87) Numéro de publication internationale: WO 2023/006536

(56) Documents cités:
- DE-A1- 10 350 787
- US-A1- 2004 231 783
- US-A1- 2015 068 435
- US-A1- 2015 174 799
- US-A1- 2015 343 699
- US-A1- 2018 281 299

## Description

La présente invention porte sur un procédé de fabrication d'une pièce de siège d'avion. L'invention trouve une application particulièrement avantageuse, mais non exclusive, avec la fabrication de tablettes repas de sièges d'avion de type économique.

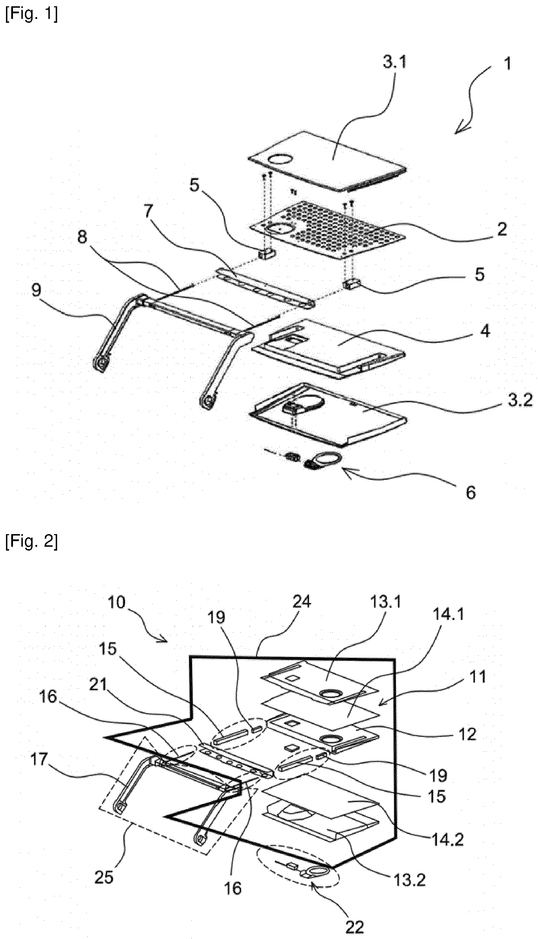

La figure 1 montre une tablette repas 1 selon l'état de la technique comportant une tôle métallique 2 ainsi que deux capots 3.1, 3.2 assemblés avec une âme 4 réalisée en mousse.

Généralement, les capots 3.1, 3.2 réalisés dans un matériau thermoplastique sont mis en forme par un procédé de thermoformage puis détourés dans une étape ultérieure. On effectue également un montage sur la tôle métallique 2 de mécanismes tels que des glissières 5, des fixations d'un dispositif porte-gobelet 6, ou des systèmes de verrouillage pour maintenir en position ces éléments. Un profilé 7 en forme de U pourra s'étendre le long d'un bord longitudinal de la tablette repas. La tablette repas 1 est configurée pour coopérer avec des tiges 8 d'un support 9 destiné à être fixé sur un dossier de siège d'avion.

L'assemblage des différents composants de la tablette repas 1 (les capots 3.1, 3.2, l'âme en mousse 4, et la tôle 2 équipée des différents mécanismes) est effectué par une opération de collage. La liaison mécanique entre les capots 3.1, 3.2 est ainsi réalisée par collage suivant leurs bords qui sont mis en recouvrement l'un par rapport à l'autre.

Un tel procédé de fabrication nécessite toutefois l'utilisation de nombreux outillages pour la mise en forme des capots ainsi que pour l'assemblage de l'ensemble. En outre, tous les assemblages, les ajustements, et les collages sont réalisés par des opérations manuelles fastidieuses et peu répétables.

De nombreuses défaillances ont été observées lors de tests ou lors de phase d'exploitation du fait des problèmes de répétabilité et des mauvaises performances des colles dont le choix est limité en raison des substrats utilisés.

La finition d'ensemble est également médiocre du fait du recouvrement entre les bords des deux capots engendrant souvent la présence de bavures de colle. En outre, la tôle utilisée pour garantir le bon positionnement des mécanismes augmente le poids de l'ensemble.

Le document US2018/281299 décrit un ensemble de tablette thermoplastique comprenant un couvercle supérieur et un couvercle inférieur. Un ensemble cadre renforcé en composite thermoplastique moulé par injection comportant une pluralité d'ouvertures de réceptacle de dispositif à ajustement serré est lié chimiquement de manière homogène au couvercle supérieur, et un cadre similaire est formé pour le couvercle inférieur. Les ensembles "cadre-couvercle" comprennent une pluralité d'éléments d'alignement encastré pouvant s'accoupler à des éléments d'alignement de précision étendus de l'ensemble "cadre-couvercle" opposé.

L'invention vise à remédier efficacement aux inconvénients précités en proposant un procédé de fabrication d'une pièce pour un siège d'avion comportant:
- une étape de positionnement d'un cadre chauffant autour d'une structure empilée comportant une âme en mousse, un premier capot et un deuxième capot réalisés dans un matériau thermoplastique disposés de part et d'autre de l'âme en mousse, un premier film de colle thermofusible intercalé entre le premier capot et l'âme en mousse et un deuxième film de colle thermofusible intercalé entre le deuxième capot et l'âme en mousse,
- une étape de chauffe locale d'au moins un bord de la structure empilée à l'aide d'un cadre chauffant,
- une étape de chauffe externe de l'ensemble de la structure empilée,
- une étape de mise en place de la structure empilée à l'intérieur d'un moule de thermoformage équipé de poinçons de découpe,
- une étape de thermoformage via une fermeture du moule de thermoformage et une application de vide à l'intérieur du moule de thermoformage, de façon à effectuer simultanément au cours d'une même étape une mise en forme du premier capot et du deuxième capot, un thermosoudage entre au moins un bord du premier capot et au moins un bord du deuxième capot, un collage du premier capot et du deuxième capot sur l'âme en mousse, et une découpe de la structure empilée suivant sa circonférence à l'aide des poinçons de découpe.

L'invention permet ainsi d'effectuer, lors de l'étape de thermoformage, un assemblage des différentes couches de matière de la pièce tout en réalisant une étape de découpe. L'invention réduit donc le temps de fabrication ainsi que le nombre d'outillages nécessaires pour conformer la pièce. L'invention permet en outre de réduire le poids de l'ensemble par élimination de la tôle métallique structurelle. En outre, en remplaçant le collage manuel des bords des capots thermoplastiques par le soudage de ces bords géré lors de l'étape de thermoformage, les défaillances induites par l'opérateur sont éliminées et la finition de la pièce est améliorée.

Selon une mise en œuvre de l'invention, préalablement à l'étape de chauffe locale, ledit procédé comporte une étape de mise en place d'au moins un insert fonctionnel destiné à être lié mécaniquement avec la structure empilée lors de l'étape de thermoformage. Cela permet d'obtenir en sortie de moule une pièce de siège d'avion intégrant au moins une partie et de préférence l'ensemble de ses fonctions.

Selon une mise en œuvre de l'invention, l'insert fonctionnel est calé en position sur le cadre chauffant de façon à garantir un positionnement correct dudit insert fonctionnel par rapport à la structure empilée.

Selon une mise en œuvre de l'invention, l'étape de chauffe locale du bord de la structure empilée est commencée avant l'étape de chauffe externe de l'ensemble de la structure empilée.

Selon une mise en œuvre de l'invention, l'étape de chauffe locale du bord de la structure empilée et l'étape de chauffe externe de l'ensemble de la structure empilée sont commencées en même temps.

Selon une mise en œuvre de l'invention, l'étape de chauffe locale du bord de la structure empilée est commencée lorsque la chauffe externe est stabilisée à un palier de température.

Selon une mise en œuvre de l'invention, l'étape de chauffe externe de l'ensemble de la structure empilée est réalisée suivant deux paliers isothermes.

Selon une mise en œuvre de l'invention, lorsqu'un organe de chauffe du cadre chauffant a atteint une température compatible avec le thermosoudage et la découpe du bord du premier capot et du deuxième capot et qu'une température d'une partie centrale de la structure empilée est homogène, le procédé comporte une étape d'arrêt de la chauffe externe et de la chauffe locale à l'aide du cadre chauffant. L'organe de chauffe est configuré de façon à chauffer uniquement la zone en proximité des zones à souder pour limiter au maximum l'inertie thermique ainsi que la consommation énergétique.

Selon une mise en œuvre de l'invention, ledit procédé comporte une étape de refroidissement de la pièce obtenue lors de l'étape de thermoformage pour stabiliser le thermoformage des capots, le collage des capots sur l'âme en mousse, et le thermosoudage des bords des capots entre eux.

Selon une mise en œuvre de l'invention, l'étape de refroidissement est réalisée par des empreintes du moule stabilisées à une température inférieure à une température de solidification d'un matériau des capots.

Selon une mise en œuvre de l'invention, l'étape de refroidissement est réalisée par une régulation en température du moule d'une température de transformation à une température inférieure à une température de solidification d'un matériau des capots.

Selon une mise en œuvre de l'invention, la chauffe externe de la structure empilée est effectuée par une cellule de chauffe externe dédiée ou en utilisant une régulation chaud/froid en température des empreintes des moules. Autrement dit, on pourra utiliser les empreintes du moule lui-même en position ouverte pour chauffer la structure empilée.

Selon une mise en œuvre de l'invention, les empreintes du moule pourront être grainées et/ou marquées de façon à obtenir une texture et/ou des marquages sur les faces externes des capots de la structure empilée.

L'invention a également pour objet une pièce pour un siège d'avion obtenue avec le procédé tel que précédemment défini.

Selon une réalisation de l'invention, la pièce pour un siège d'avion pourra être choisie parmi une tablette repas, un dossier, une assise, un appui-tête, ou un panneau de coque d'intimité.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
[Fig. 1] La figure 1, déjà décrite, est une vue en perspective éclatée d'une tablette repas de siège d'avion selon l'état de la technique;
[Fig. 2] La figure 2 est une vue en perspective éclatée d'une tablette repas de siège d'avion selon la présente invention;
[Fig. 3] La figure 3 est une vue de dessus d'un cadre chauffant disposé autour d'une structure empilée de la tablette repas selon l'invention;
[Fig. 4] La figure 4 est une vue en coupe selon le plan A-A de la figure 3 montrant l'intégration d'une résistance chauffante à l'intérieur du cadre chauffant;
[Fig. 5a] [Fig. 5b] [Fig. 5c] [Fig. 5d] [Fig. 5e] Les figures 5a à 5e illustrent les différentes étapes du procédé de fabrication d'une tablette de siège d'avion selon la présente invention;
[Fig. 6a] [Fig. 6b] [Fig. 6c] Les figures 6a à 6c montrent l'évolution, en fonction du temps, de la température de la matière, du cadre chauffant, d'une cellule de chauffe externe, et d'un moule de thermoformage pour différents cycles thermiques possibles pour la mise en œuvre du procédé de fabrication selon l'invention;
[Fig. 7a] [Fig. 7b] [Fig. 7c] [Fig. 7d] Les figures 7a à 7d sont des vues schématiques en coupe illustrant différentes géométries possibles des poinçons de découpe intégrés dans le moule de thermoformage.

Il est à noter que, sur la figure 2 et les figures suivantes, les éléments structurels et/ou fonctionnels communs aux différents modes de réalisation présentent les mêmes références. Ainsi, sauf mention contraire, de tels éléments disposent de propriétés structurelles, dimensionnelles et matérielles identiques.

La figure 2 montre une vue en perspective éclatée d'une tablette repas 10 de siège d'avion comportant un plateau constitué par une structure empilée 11 dite également "structure sandwich" formée par un empilement de différentes couches de matériaux. En l'occurrence, la structure empilée 11 est formée par une âme en mousse 12, un premier capot 13.1 et un deuxième capot 13.2 réalisés dans un matériau thermoplastique, et des films de colle thermofusible 14.1, 14.2 disposés entre les capots 13.1, 13.2 et l'âme en mousse 12. Les films de colle thermofusible 14.1, 14.2 sont constitués d'une colle apte à fondre à haute température.

L'âme en mousse 12 pourra être obtenue par usinage d'un bloc de mousse ou par expansion d'un matériau en mousse polyuréthane à l'intérieur d'un moule de façon à être préformée pour être assemblée avec ou non une légère surépaisseur pour améliorer le collage avec les capots 13.1, 13.2. Le premier capot 13.1 et le deuxième capot 13.2 pourront être réalisés à partir de plaques de thermoformages d'épaisseurs comprises entre 1 à 3 mm en polycarbonate (PC) ou en polychlorure de vinyle (PVC).

La tablette 10 comporte en outre deux glissières 15 destinées à coopérer chacune avec une tige 16 d'un support de tablette 17 monté sur un dossier de siège. Le support de tablette 17 est articulé de façon à pouvoir faire passer la tablette 10 d'une position stockée dans laquelle la tablette 10 est plaquée contre une face arrière du dossier à une position déployée dans laquelle la tablette 10 présente une orientation sensiblement horizontale pour permettre au passager d'y poser un plateau repas ou des objets. Les glissières 15 et les tiges 16 permettent d'assurer un déplacement en translation de la tablette 10 par rapport au support 17 lorsque la tablette 10 est en position déployée. Le positionnement de la tablette 10 pourra ainsi être adapté à la morphologie du passager. Les glissières 15 sont associées à des coussinets 19. De préférence, une glissière 15 présente un corps parallélépipède de façon à pouvoir se loger entre une empreinte réalisée dans l'âme en mousse 12 et un capot 13.1, 13.2 de façon à limiter tout creux et défaut de forme lors du thermoformage des capots 13.1, 13.2 et de présenter un bon appui au collage.

La tablette 10 comporte également un profilé 21 en forme de U s'étendant suivant un bord longitudinal. Le profilé 21 pourra être réalisé dans un matériau métallique, notamment en aluminium, ou dans un matériau plastique, notamment en polycarbonate (PC).

On pourra prévoir également un dispositif porte-gobelet 22 fixé sur une face arrière de la tablette 10 et utilisable lorsque la tablette 10 est en position stockée.

Les composants entourés par le trait plein 24 sont utilisés dans le procédé de fabrication selon l'invention. Les composants entourés par le trait discontinu 25, à savoir le support de tablette 17 et le dispositif porte-gobelet 22 n'interviennent pas dans ce procédé. Cependant, un insert de fixation du porte-gobelet 22 pourra être intégré lors de la fabrication de la structure empilée 11 formant le plateau de la tablette repas 10.

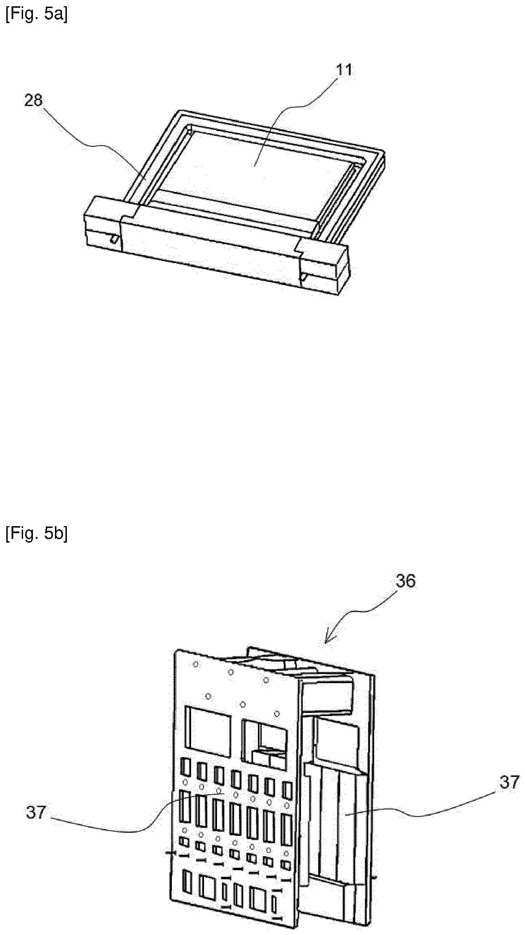

On décrit ci-après, en référence avec les figures 5a à 5e, les différentes étapes de fabrication de la tablette 10 selon l'invention.

Comme cela est illustré par la figure 5a, un cadre chauffant 28, qui pourra également être appelé "cadre mobile", est disposé autour de la structure empilée 11 comportant l'âme en mousse 12, le premier capot 13.1 et le deuxième capot 13.2 disposés de part et d'autre de l'âme en mousse 12, un premier film de colle thermofusible 14.1 disposé entre le premier capot 13.1 et l'âme en mousse 12, et un deuxième film de colle thermofusible 14.2 disposé entre le deuxième capot 13.2 et l'âme en mousse 12. La structure empilée 11 est ainsi formée par l'empilement des éléments suivants: capot 13.1-film de colle 14.1-âme en mousse 12-film de colle 14.2-capot 13.2. Les différents éléments situés entre les capots 13.1, 13.2 sont pris en sandwich entre deux éléments adjacents.

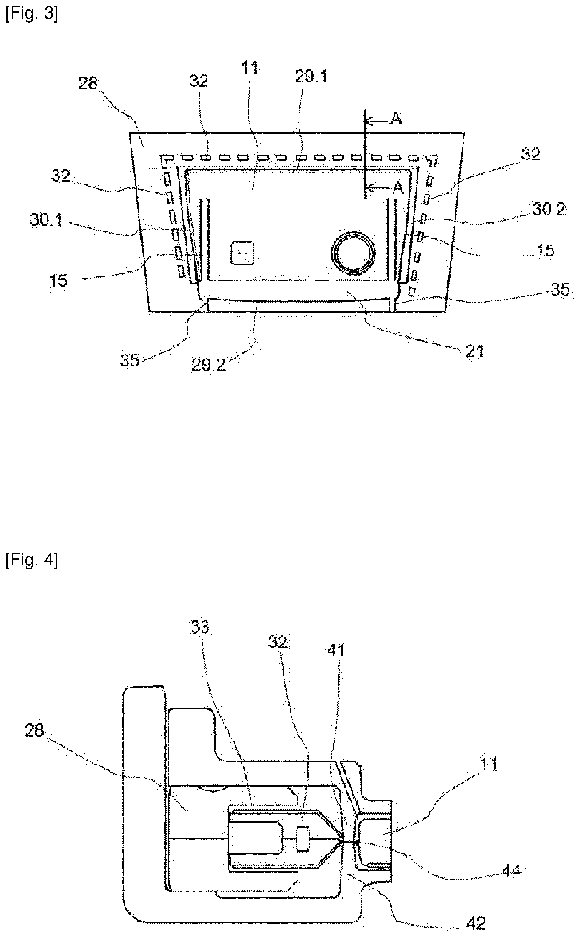

Comme on peut le voir sur la figure 3, le cadre mobile 28 s'étend suivant deux bords longitudinaux 29.1, 29.2 et deux bords transversaux 30.1, 30.2 de la structure empilée 11. Le cadre mobile 28 est muni d'un ou plusieurs organes de chauffe 32, tel qu'une ou plusieurs résistances électriques. Le ou les organes de chauffe 32 sont configurés pour assurer une chauffe locale des bords de la structure empilée 11, notamment le bord longitudinal 29.1 et les deux bords transversaux 30.1, 30.2. Le ou les organes de chauffe 32 sont configurés de façon à chauffer uniquement la zone en proximité des zones à souder pour limiter au maximum l'inertie thermique ainsi que la consommation énergétique. Dans d'autres applications, le cadre chauffant 28 pourra être configuré pour effectuer le chauffage d'un nombre différent de bords de la structure empilée 11. Avantageusement, le cadre chauffant 28 comporte un système de maintien du vide permettant de garantir l'application de vide à l'intérieur du moule 39 lors de l'étape de thermoformage.

Cela est particulièrement bien adapté à une tablette 10 comportant un profilé 21 réalisé en métal positionné le long du côté longitudinal, dans la mesure où il n'est pas nécessaire de chauffer ce côté pour assurer la soudure entre les bords des deux capots 13.1, 13.2. Une telle chauffe locale des bords de la structure empilée 11 permet d'obtenir une température élevée au bord des capots 13.1, 13.2 afin de permettre le soudage des capots 13.1, 13.2 lors de leur mise en contact et de faciliter la découpe ultérieure des capots 13.1, 13.2 et ce sans dégrader la matière et l'état de surface de la pièce. En variante, dans le cas où le profilé 21 est réalisé dans un matériau thermoplastique, le cadre chauffant 28 assure un chauffage des 4 bords 29.1, 29.2, 30.1, 30.2 de la structure empilée 11.

Comme cela est illustré par la figure 4, un organe de chauffe 32 est disposé à l'intérieur d'une gorge 33 du cadre chauffant 28. L'organe de chauffe 32 pourra présenter une forme en pointe de façon à chauffer précisément un bord correspondant 29.1, 29.2, 30.1, 30.2 de la structure empilée 11 le long duquel s'étend l'organe de chauffe 32.

Le cadre chauffant 28 pourra également assurer un indexage en position d'un ou plusieurs inserts fonctionnels par rapport à la structure empilée 11 de façon à garantir un positionnement correct du ou des inserts à l'intérieur de la pièce à l'issue du procédé. Ainsi, une tige 16 pourra être calée en position sur le cadre chauffant 28 via une forme 35 visible en figure 3, tel qu'un logement ménagé dans le cadre chauffant 28 destiné à recevoir une extrémité de la tige 16. Les glissières 15 fixées sur les tiges 16 pourront être positionnées sur des formes usinées dans l'âme en mousse 12.

On entend par "insert fonctionnel" tout élément rapporté destiné à être lié mécaniquement à la structure empilée 11 pour assurer une fonction particulière (fixation, renfort, articulation, glissière, verrouillage, ou autre). Les inserts fonctionnels prennent la forme de tiges et de glissières pour la fabrication d'une tablette repas 10 mais ils pourraient prendre la forme d'autres éléments pour la fabrication d'un autre élément de siège, comme cela est expliqué plus en détails ci-après.

Le cadre 28 est configuré pour assurer un maintien des différents éléments de la structure empilée 11 en place lors des phases de manipulation et permettre l'application de vide à l'intérieur du moule 39 lors de la phase de thermoformage.

La figure 5b montre une cellule de chauffe externe 36 utilisée pour effectuer une étape de chauffe externe de l'ensemble de la structure empilée 11. A cet effet, la cellule de chauffe 36 comporte deux parois chauffantes 37 destinées à être positionnées de part et d'autre de la structure empilée 11. La cellule de chauffe 36 assure avantageusement un chauffage par radiation de l'ensemble de la structure empilée 11 via des parois céramiques. La cellule de chauffe 36 externe peut être mobile ou fixe.

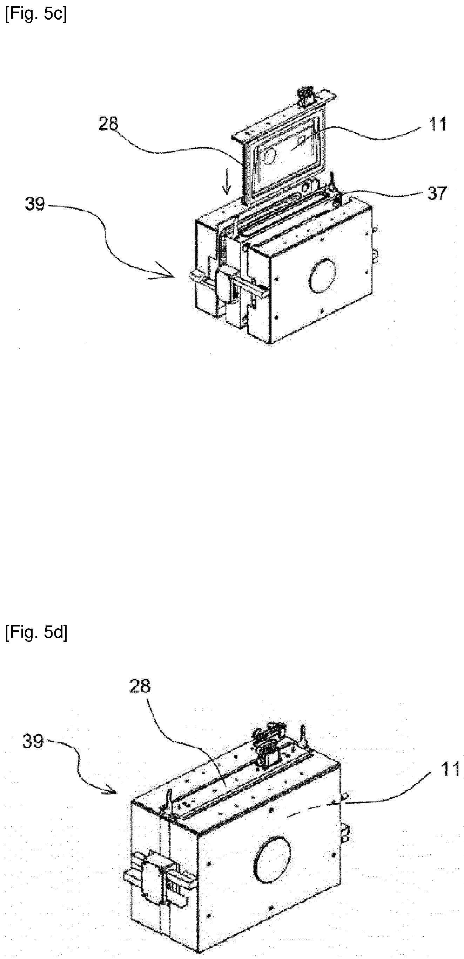

Comme on peut le voir sur la figure 5c, le cadre chauffant 28 et la structure empilée 11 sont mis en place à l'intérieur d'un moule de thermoformage 39. Le moule de thermoformage 39 est équipé de poinçons de découpe 41, 42 visible en figure 4 . Les poinçons de découpe 41, 42 s'étendent suivant au moins un bord des capots 13.1, 13.2. Le poinçon de découpe 41 est solidaire d'une empreinte supérieure du moule 39 et le poinçon de découpe 42 est solidaire d'une empreinte inférieure du moule 39.

La géométrie des poinçons de découpe 41, 42 pourra être adaptée en fonction des matières employées, du cycle thermique appliqué, et de la géométrie du produit final souhaitée.

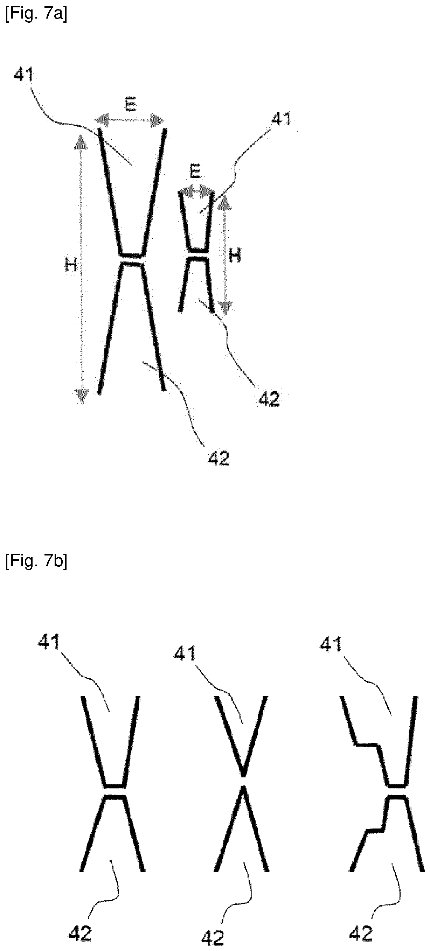

Ainsi, comme cela est illustré par la figure 7a, une hauteur H et une épaisseur E des poinçons 41, 42 pourront varier d'une application à une autre.

Comme cela est illustré par la figure 7b, la zone de contact entre les poinçons 41, 42 pourra être plate, aigue pour des poinçons pointus, ou de forme complexe avec un décrochement par rapport à la zone de contact principale.

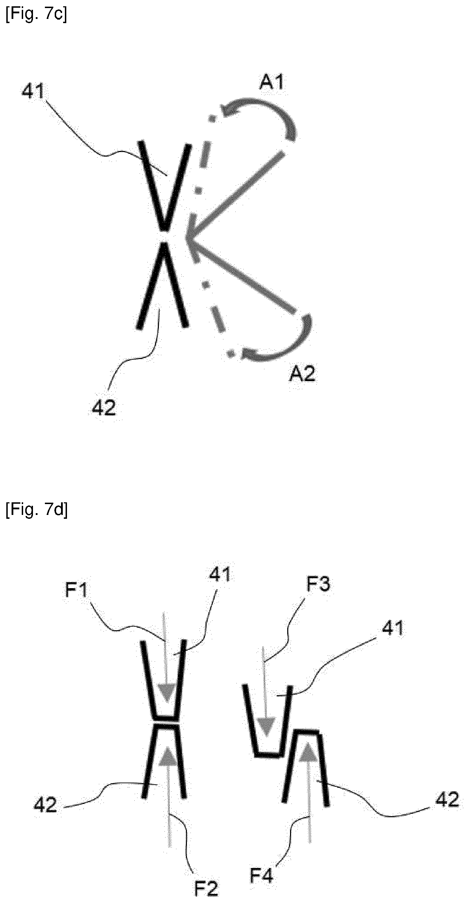

Comme cela est illustré par la figure 7c, un angle d'ouverture A1, A2 des poinçons 41, 42 pourra également varier en fonction de l'application.

Comme cela est illustré par la figure 7d, la cinématique de contact des poinçons 41, 42 pourra être à contact plat suivant les flèche F1 et F2 ou cisaillante suivant les flèches F3 et F4.

Il est à noter que dans une mise en œuvre alternative du procédé, la chauffe externe de la structure empilée 11 pourra être effectuée en utilisant une régulation chaud/froid en température des empreintes du moule 39. Autrement dit, on pourra utiliser les empreintes du moule 39 lui-même en position légèrement ouverte pour chauffer la structure empilée 11.

Comme cela est illustré par la figure 5d, le procédé comporte une étape de thermoformage effectuée par une fermeture du moule 39 et une application de vide à l'intérieur du moule 39. Le thermoformage est un thermoformage "double face" réalisé par les empreintes du moule 39 sur les deux capots 13.1, 13.2 situés chacun à une extrémité de la structure empilée 11. On effectue alors simultanément, au cours d'une même étape, une mise en forme du premier capot 13.1 et du deuxième capot 13.2, un thermosoudage entre les bords du premier capot 13.1 et les bords du deuxième capot 13.2, une découpe de la structure empilée 11 suivant sa circonférence à l'aide des poinçons de découpe 41, 42, un collage du premier capot 13.1 et du deuxième capot 13.2 sur l'âme en mousse 12, ainsi qu'une liaison mécanique des glissières 15 avec la structure empilée 11.

Ainsi, les matériaux des deux capots 13.1, 13.2 se soudent à l'endroit des bords sous l'action de la chaleur pour former un cordon de soudure 44 le long de leurs bords (cf. figure 4). Le cordon de soudure 44 présente une tenue mécanique adaptée aux exigences de durée de vie du produit. La géométrie du cordon de soudure 44 formée entre les deux capots 13.1, 13.2 dépend de la forme des poinçons de découpe 41, 42 ainsi que du paramètre de vitesse de fermeture du moule de thermoformage 39.

L'âme en mousse 12 pourra présenter une légère surépaisseur, de sorte que la fermeture du moule 39 vient écraser légèrement l'âme en mousse 12 pour améliorer le collage des capots 13.1, 13.2 sur l'âme en mousse 12 via les films de colle 14.1, 14.2.

Le procédé comporte également une étape de refroidissement de la pièce obtenue lors de l'étape de thermoformage pour stabiliser le thermoformage des capots 13.1, 13.2, le collage des capots 13.1, 13.2 sur l'âme en mousse 12, et le thermosoudage des bords des capots 13.1, 13.2 entre eux. Cette étape de refroidissement pourra être réalisée soit par des empreintes du moule 39 stabilisées à une température inférieure à la température de solidification d'un matériau des capots 13.1, 13.2, soit par une régulation en température du moule 39 d'une température de transformation à une température inférieure à une température de solidification d'un matériau des capots 13.1, 13.2. A cet effet, le moule 39 pourra comporter un réseau de refroidissement liquide intégré dans les empreintes.

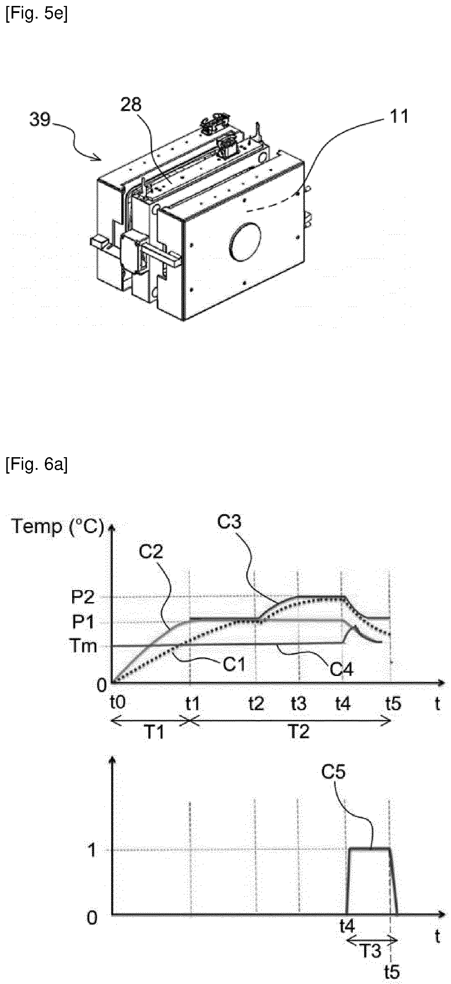

Après l'ouverture du moule de thermoformage 39 montrée sur la figure 5e et le retrait du cadre chauffant 28, la tablette repas 10 se trouve en état final de finition avec l'intégration de toutes ses fonctions.

Les empreintes du moule 39 pourront être grainées et/ou marquées de façon à obtenir une texture et/ou des marquages sur les faces externes des capots 13.1, 13.2.

On décrit ci-après, en référence avec les figures 6a à 6c, différents cycles thermiques possibles pour la mise en œuvre du procédé de fabrication selon l'invention. Les températures indiquées pourront varier en fonction du matériau employé pour les différents composants. Les valeurs de température indiquées ci-dessous sont particulièrement bien adaptées pour des capots 13.1, 13.2 réalisés en polycarbonate (PC), une âme en mousse réalisée dans un matériau Polyéthersulfone (PES) ainsi que des films de colle 14.1, 14.2 à base de polyester.

Sur ces figures, la courbe C1 correspond à la température de la matière de la structure empilée 11. La courbe C2 correspond à la température du cadre chauffant 28. La courbe C3 correspond à la température de la cellule de chauffe 36. La courbe C4 correspond à la température du moule de thermoformage 39. La courbe C5 correspond à l'état du moule de thermoformage 39. Lorsque la courbe C5 est à l'état 0, le moule 39 est ouvert tandis que lorsque la courbe est à l'état 1, le moule 39 est fermé et le vide est appliqué à l'intérieur du moule 39.

Dans la mise en œuvre de la figure 6a, l'étape de chauffe locale des bords de la structure empilée 11 (cf. courbe C2) est commencée avant l'étape de chauffe externe de l'ensemble de la structure empilée 11 (cf. courbe C3).

Ainsi, entre les instants t0 et t1, le cadre chauffant 28 assure un chauffage local des bords de la structure empilée 11. La température du moule 39 demeure constante à une température Tm comprise entre 70 et 120°C.

A partir de l'instant t1, la chauffe externe de la structure empilée 11 commence (cf. courbe C3). La température de chauffe externe ainsi que la température du cadre chauffant 28 sont maintenues à un palier isotherme P1 compris entre 130 et 170°C entre les instants t1 et t2.

Entre les instants t2 et t3, la température du cadre chauffant 28 (cf. courbe C2) est maintenue constante au palier isotherme compris entre 130°C et 170°C, tandis que la température de la cellule de chauffe 36 externe augmente jusqu'à un deuxième palier isotherme P2 compris entre 180°C et 230°C (cf. courbe C3).

Entre les instants t3 et t4, la température de la cellule de chauffe 36 externe est maintenue constante au deuxième palier isotherme P2 pour garantir un thermoformage optimal des capots 13.1, 13.2.

A l'instant t4, lorsque le cadre chauffant 28 a atteint une température compatible avec le thermosoudage et la découpe des bords du premier capot 13.1 et du deuxième capot 13.2 et qu'une température d'une partie centrale de la structure empilée 11 est homogène, on coupe la chauffe du cadre chauffant 28 (cf. courbe C2) ainsi que la chauffe externe de la cellule de chauffe 36 (cf. courbe C3). Le moule 39 est alors fermé et du vide est appliqué à l'intérieur du moule 39 lors de l'étape de thermoformage (cf. courbe C5). Cette étape au cours de laquelle sont effectués une mise en forme des capots 13.1, 13.2, un thermosoudage des bords des capots 13.1, 13.2, un détourage de la structure empilée 11 et l'intégration des inserts fonctionnels de la tablette 10 dure jusqu'à l'instant t5. En outre, entre les instants t4 et t5, le moule 39 refroidit la tablette 10 jusqu'à une température de démoulage.

Le refroidissement de la pièce est ainsi effectué dans le moule 39 ayant une température inférieure à une température de solidification d'un matériau des capots 13.1, 13.2. La température ainsi que la vitesse de refroidissement pourront être adaptées en fonction des matériaux utilisés. A l'instant t5, le moule 39 est ouvert et l'aspiration est coupée. La pièce peut ensuite être sortie du moule 39.

La durée T1 de préchauffage des bords par le cadre chauffant 28 pourra être comprise entre 5 et 15 minutes. La durée T2 de temps de cycle pourra être comprise entre 10 et 15 minutes également. La durée T3 de fermeture du moule 39 et d'application du vide est comprise entre 2 et 5 minutes.

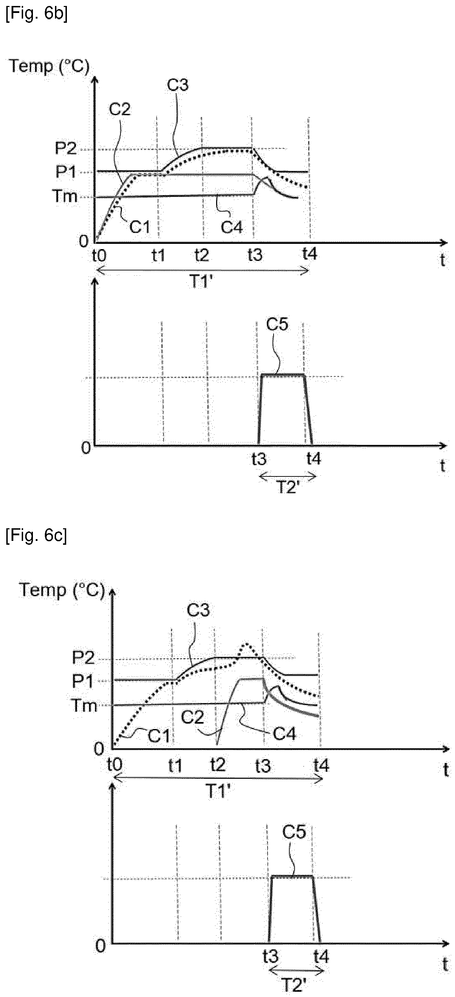

Dans la mise en œuvre de la figure 6b, l'étape de chauffe locale des bords de la structure empilée 11 (cf. courbe C2) et l'étape de chauffe externe de l'ensemble de la structure empilée 11 (cf. courbe C3) sont commencées en même temps.

Ainsi, entre les instants t0 et t1, le cadre chauffant 28 et la cellule de chauffe 36 sont activés jusqu'à ce que la matière atteigne un palier isotherme P1 compris entre 130 et 170°C. La température Tm du moule 39 demeure constante à une température comprise entre 70 et 120°C.

Entre les instants t1 et t2, la température du cadre chauffant 28 est maintenue constante au palier isotherme P1 (cf. courbe C2), tandis que la température de la cellule de chauffe 36 (cf. courbe C3) augmente jusqu'à un deuxième palier isotherme P2 compris entre 180°C et 230°C.

Entre les instants t2 et t3, la température de la cellule de chauffe 36 externe (cf. courbe C3) est maintenue constante au deuxième palier isotherme P2 pour garantir un thermoformage optimal des capots 13.1, 13.2.

A l'instant t3, lorsque le ou les organes de chauffe 32 ont atteint une température compatible avec le thermosoudage et la découpe des bords du premier capot 13.1 et du deuxième capot 13.2 et qu'une température d'une partie centrale de la structure empilée 11 est homogène, on coupe la chauffe du cadre chauffant 28 (cf. courbe C2) ainsi que la chauffe externe de la cellule de chauffe 36 (cf. courbe C3). Le moule 39 est alors fermé et du vide est appliqué à l'intérieur du moule 39 lors de l'étape de thermoformage (cf. courbe C5). L'étape de thermoformage dure jusqu'à l'instant t4. En outre, entre les instants t3 et t4, le moule 39 refroidit la tablette 10 jusqu'à la température de démoulage. A l'instant t4, le moule 39 est ouvert et l'aspiration est coupée. La pièce peut ensuite être sortie du moule 39.

La durée T1' de temps de cycle pourra être comprise entre 5 et 15 minutes également. La durée T2' de fermeture du moule 39 et d'application du vide est comprise entre 2 et 5 minutes.

Dans la mise en œuvre de la figure 6c, l'étape de chauffe locale des bords de la structure empilée 11 (cf. courbe C2) est commencée lorsque la chauffe externe est stabilisée au palier de température P2 (cf. courbe C3).

Plus précisément, entre les instants t0 et t1, la cellule de chauffe 36 externe (cf. courbe C3) est activée jusqu'à ce que la matière atteigne un premier palier isotherme P1 compris entre 130 et 170°C (cf. courbe C1). La température du moule 39 demeure constante à une température Tm comprise entre 70 et 120°C.

Entre les instants t1 et t2, la température de la cellule de chauffe 36 externe (cf. courbe C3) augmente jusqu'à un deuxième palier isotherme P2 compris entre 180°C et 230°C.

Entre les instants t2 et t3, la température de la cellule de chauffe 36 externe est maintenue constante au deuxième palier isotherme P2 tandis que le cadre chauffant 28 est activé (cf. courbe C2) afin d'obtenir une température élevée de la matière garantissant un thermoformage optimal des capots 13.1, 13.2.

A l'instant t3, lorsque le ou les organes de chauffe 32 ont atteint une température compatible avec le thermosoudage et la découpe des bords du premier capot 13.1 et du deuxième capot 13.2 et qu'une température d'une partie centrale de la structure empilée 11 est homogène, on coupe la chauffe du cadre chauffant 28 (cf. courbe C2) ainsi que la chauffe externe de la cellule de chauffe 36 (cf. courbe C3). Le moule 39 est alors fermé et du vide est appliqué à l'intérieur du moule 39 lors de l'étape de thermoformage (cf. courbe C5). L'étape de thermoformage dure jusqu'à l'instant t4. En outre, entre les instants t3 et t4, le moule 39 refroidit la tablette 10 jusqu'à une température de démoulage. A l'instant t4, le moule 39 est ouvert et l'aspiration est coupée. La pièce peut ensuite être sortie du moule 39.

La durée T1' de temps de cycle pourra être comprise entre 10 et 15 minutes également. La durée T2' de fermeture du moule 39 et d'application du vide T3 est comprise entre 2 et 5 minutes.

Il est à noter que dans tous les cas, l'étape de chauffe externe de l'ensemble de la structure empilée 11 (cf. courbe C3) est réalisée suivant les deux paliers isothermes P1 et P2. Cela permet d'assurer une chauffe progressive de la matière évitant sa détérioration.

En variante, la chauffe externe est effectuée directement dans le moule 39 à l'état ouvert comme cela a été expliqué précédemment.

Le procédé a été décrit pour la réalisation d'une tablette repas 10 mais ce procédé pourrait également être mis en œuvre avec toute autre pièce de siège d'avion ayant une structure dite "sandwich" dans laquelle plusieurs couches de différents matériaux sont empilées, comme par exemple une assise, un dossier, ou un appui-tête, ou un panneau de coque d'intimité. Certaines pièces pourront intégrer divers inserts fonctionnels 15, tels qu'une tige de fixation pour un appui-tête, un renfort ou une articulation pour un dossier ou une assise. D'autres pièces, en particulier le panneau de la coque d'intimité, pourront être dépourvues d'insert fonctionnel 15. L'étape d'indexage d'un insert fonctionnel 15 par rapport au cadre chauffant 28 est donc une étape optionnelle du procédé.

Bien entendu, les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

En outre, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association.

## Revendications

1. Procédé de fabrication d'une pièce (10) pour un siège d'avion **caractérisé en ce qu'**il comporte:
- une étape de positionnement d'un cadre chauffant (28) autour d'une structure empilée (11) comportant une âme en mousse (12), un premier capot (13.1) et un deuxième capot (13.2) réalisés dans un matériau thermoplastique disposés de part et d'autre de l'âme en mousse (12), un premier film de colle thermofusible (14.1) intercalé entre le premier capot (13.1) et l'âme en mousse (12) et un deuxième film de colle thermofusible (14.2) intercalé entre le deuxième capot (13.2) et l'âme en mousse (12),
- une étape de chauffe locale d'au moins un bord (29.1, 29.2, 30.1, 30.2) de la structure empilée (11) à l'aide d'un cadre chauffant (28),
- une étape de chauffe externe de l'ensemble de la structure empilée (11),
- une étape de mise en place de la structure empilée (11) à l'intérieur d'un moule de thermoformage (39) équipé de poinçons de découpe (41, 42),
- une étape de thermoformage via une fermeture du moule de thermoformage (39) et une application de vide à l'intérieur du moule de thermoformage (39), de façon à effectuer simultanément au cours d'une même étape une mise en forme du premier capot (13.1) et du deuxième capot (13.2), un thermosoudage entre au moins un bord du premier capot (13.1) et au moins un bord du deuxième capot (13.2), un collage du premier capot (13.1) et du deuxième capot (13.2) sur l'âme en mousse (12), et une découpe de la structure empilée (11) suivant sa circonférence à l'aide des poinçons de découpe (41, 42).

2. Procédé selon la revendication 1, **caractérisé en ce que** préalablement à l'étape de chauffe locale, ledit procédé comporte une étape de mise en place d'au moins un insert fonctionnel (15) destiné à être lié mécaniquement avec la structure empilée (11) lors de l'étape de thermoformage.

3. Procédé selon la revendication 2, **caractérisé en ce que** l'insert fonctionnel (15) est calé en position sur le cadre chauffant (28) de façon à garantir un positionnement correct dudit insert fonctionnel (15) par rapport à la structure empilée (11).

4. Procédé selon la revendication 1 ou 2, **caractérisé en ce que** l'étape de chauffe locale du bord (29.1, 29.2, 30.1, 30.2) de la structure empilée (11) est commencée avant l'étape de chauffe externe de l'ensemble de la structure empilée (11).

5. Procédé selon la revendication 1 ou 2, **caractérisé en ce que** l'étape de chauffe locale du bord (29.1, 29.2, 30.1, 30.2) de la structure empilée (11) et l'étape de chauffe externe de l'ensemble de la structure empilée (11) sont commencées en même temps.

6. Procédé selon la revendication 1 ou 2, **caractérisé en ce que** l'étape de chauffe locale du bord (29.1, 29.2, 30.1, 30.2) de la structure empilée (11) est commencée lorsque la chauffe externe est stabilisée à un palier de température (P2).

7. Procédé selon l'une quelconque des revendications 1 à 5, **caractérisé en ce que** l'étape de chauffe externe de l'ensemble de la structure empilée (11) est réalisée suivant deux paliers isothermes (P1, P2).

8. Procédé selon l'une quelconque des revendications 1 à 6, **caractérisé en ce que** lorsqu'un organe de chauffe (32) du cadre chauffant (28) a atteint une température compatible avec le thermosoudage et la découpe d'un bord du premier capot (13.1) et du deuxième capot (13.2) et qu'une température d'une partie centrale de la structure empilée (11) est homogène, le procédé comporte une étape d'arrêt de la chauffe externe et de la chauffe locale à l'aide du cadre chauffant (28).

9. Procédé selon l'une quelconque des revendications 1 à 7, **caractérisé en ce qu'**il comporte une étape de refroidissement de la pièce (10) obtenue lors de l'étape de thermoformage pour stabiliser le thermoformage des capots (13.1, 132.), le collage des capots (13.1, 13.2) sur l'âme en mousse (12), et le thermosoudage des bords des capots (13.1, 13.2) entre eux.

10. Procédé selon la revendication 9, **caractérisé en ce que** l'étape de refroidissement est réalisée par des empreintes du moule (39) stabilisées à une température inférieure à une température de solidification d'un matériau des capots (13.1, 13.2).

11. Procédé selon la revendication 9, **caractérisé en ce que** l'étape de refroidissement est réalisée par une régulation en température du moule (39) d'une température de transformation à une température inférieure à une température de solidification d'un matériau des capots (13.1, 13.2).

12. Procédé selon l'une quelconque des revendications 1 à 11, **caractérisé en ce que** l'étape de chauffe externe est effectuée par une cellule de chauffe externe (36) dédiée ou par des empreintes du moule (39) à l'état ouvert.

13. Pièce pour un siège d'avion obtenue avec le procédé tel que défini selon l'une quelconque des revendications précédentes.

14. Pièce pour un siège d'avion selon la revendication 13, **caractérisée en ce qu'**elle est choisie parmi une tablette repas (10), un dossier, une assise, un appui-tête, ou un panneau de coque d'intimité.

## Patentansprüche

1. Verfahren zur Herstellung eines Teils (10) für einen Flugzeugsitz, **dadurch gekennzeichnet, dass** es umfasst:
- einen Schritt des Positionierens eines Heizrahmens (28) um eine Stapelstruktur (11), die einen Schaumkern (12), eine erste Abdeckung (13.1) und eine zweite Abdeckung (13.2) aus einem thermoplastischen, auf beiden Seiten des Schaumkerns (12) angeordneten Material, einen ersten, zwischen der ersten Abdeckung (13.1) und dem Schaumkern (12) zwischengelegten Film aus wärmeschmelzbarem Klebstoff (14.1), und einen zweiten, zwischen der zweiten Abdeckung (13.2) und dem Schaumkern (12) zwischengelegten Film aus wärmeschmelzbarem Klebstoff (14.2) umfasst,
- einen Schritt des lokalen Erhitzens mindestens einer Kante (29.1, 29.2, 30.1, 30.2) der Stapelstruktur (11) mittels eines Heizrahmens (28),
- einen Schritt des externen Erhitzens der gesamten Stapelstruktur (11),
- einen Schritt des Einlegens der Stapelstruktur (11) in eine mit Schneidstempeln (41, 42) ausgestattete Thermoformungsform (39),
- einen Schritt des Thermoformens durch Schließen der Thermoformungsform (39) und Anlegen eines Vakuums innerhalb der Thermoformungsform (39), um so während desselben Schrittes gleichzeitig einen Prozess zum Formen der ersten Abdeckung (13.1) und der zweiten Abdeckung (13.2), einen Prozess zum Heißschweißen mindestens einer Kante der ersten Abdeckung (13.1) und mindestens einer Kante der zweiten Abdeckung (13.2) miteinander, einen Prozess zum Verbinden der ersten Abdeckung (13.1) und der zweiten Abdeckung (13.2) mit dem Schaumkern (12) und einen Prozess zum Schneiden der Stapelstruktur (11) entlang ihres Umfangs mittels der Schneidstempel (41, 42) durchzuführen.

2. Verfahren nach Anspruch 1, **dadurch gekennzeichnet, dass** das Verfahren vor dem lokalen Erhitzungsschritt einen Schritt des Platzierens mindestens eines Funktionseinsatzes (15) umfasst, der während des Thermoformungsschritts mechanisch mit der Stapelstruktur (11) verbunden werden soll.

3. Verfahren nach Anspruch 2, **dadurch gekennzeichnet, dass** der Funktionseinsatz (15) auf dem Heizrahmen (28) fixiert wird, um eine korrekte Positionierung des Funktionseinsatzes (15) relativ zur Stapelstruktur (11) zu gewährleisten.

4. Verfahren nach Anspruch 1 oder 2, **dadurch gekennzeichnet, dass** der Schritt des lokalen Erhitzens der Kante (29.1, 29.2, 30.1, 30.2) der Stapelstruktur (11) vor dem Schritt des externen Erhitzens der gesamten Stapelstruktur (11) begonnen wird.

5. Verfahren nach Anspruch 1 oder 2, **dadurch gekennzeichnet, dass** der Schritt des lokalen Erhitzens der Kante (29.1, 29.2, 30.1, 30.2) der Stapelstruktur (11) und der Schritt des externen Erhitzens der gesamten Stapelstruktur (11) gleichzeitig begonnen werden.

6. Verfahren nach Anspruch 1 oder 2, **dadurch gekennzeichnet, dass** der Schritt des lokalen Erhitzens der Kante (29.1, 29.2, 30.1, 30.2) der Stapelstruktur (11) begonnen wird, wenn sich der externe Heizprozess auf einem Temperaturniveau (P2) stabilisiert hat.

7. Verfahren nach einem der Ansprüche 1 bis 5, **dadurch gekennzeichnet, dass** der Schritt des externen Erhitzens der gesamten Stapelstruktur (11) auf zwei isothermen Ebenen (P1, P2) durchgeführt wird.

8. Verfahren nach einem der Ansprüche 1 bis 6, **dadurch gekennzeichnet, dass**, wenn ein Heizelement (32) des Heizrahmens (28) eine Temperatur erreicht hat, die mit den Prozessen des Heißschweißens und Schneidens einer Kante der ersten Abdeckung (13.1) und einer Kante der zweiten Abdeckung (13.2) kompatibel ist, und wenn eine Temperatur eines zentralen Teils der Stapelstruktur (11) homogen ist, das Verfahren einen Schritt des Stoppens der externen und lokalen Erhitzung mittels des Heizrahmens (28) umfasst.

9. Verfahren nach einem der Ansprüche 1 bis 7, **dadurch gekennzeichnet, dass** es einen Schritt des Abkühlens des während des Thermoformungsschritts erhaltenen Teils (10) umfasst, um die Prozesse des Thermoformens der Abdeckungen (13.1, 13.2), des Verbindens der Abdeckungen (13.1, 13.2) mit dem Schaumkern (12) und des Heißschweißens der Kanten der Abdeckungen (13.1, 13.2) miteinander zu stabilisieren.

10. Verfahren nach Anspruch 9, **dadurch gekennzeichnet, dass** der Kühlschritt durch Abdrücke der Form (39) durchgeführt wird, die bei einer als die Erstarrungstemperatur eines Materials der Abdeckungen (13.1, 13.2) niedrigeren Temperatur stabilisiert sind.

11. Verfahren nach Anspruch 9, **dadurch gekennzeichnet, dass** der Kühlschritt durch Regeln der Temperatur der Form (39) von einer Transformationstemperatur auf eine Temperatur unterhalb einer Erstarrungstemperatur eines Materials der Abdeckungen (13.1, 13.2) durchgeführt wird.

12. Verfahren nach einem der Ansprüche 1 bis 11, **dadurch gekennzeichnet, dass** der externe Heizschritt durch eine spezielle externe Heizzelle (36) oder durch Abdrücke der Form (39) im geöffneten Zustand durchgeführt wird.

13. Teil für einen Flugzeugsitz, der mit dem Verfahren gemäß einem der vorhergehenden Ansprüche erhalten wird.

14. Teil für einen Flugzeugsitz nach Anspruch 13, **dadurch gekennzeichnet, dass** er aus einer Tischklappe (10), einer Rückenlehne, einer Sitzfläche, einer Kopfstütze oder einer Sichtschutzschale ausgewählt ist.

## Claims

1. A method of manufacturing a part (10) for an aircraft seat, **characterized in that** it comprises:
- a step of positioning a heating frame (28) around a stacked structure (11) comprising a foam core (12), a first cover (13.1) and a second cover (13.2) out of a thermoplastic material arranged on either side of the foam core (12), a first film of thermofusible glue (14.1) inserted between the first cover (13.1) and the foam core (12) and a second film of thermofusible glue (14.2) inserted between the second cover (13.2) and the foam core (12),
- a step of locally heating at least one edge (29.1, 29.2, 30.1, 30.2) of the stacked structure (11) by means of a heating frame (28),
- an step of externally heating the entire stacked structure (11),
- a step of placing the stacked structure (11) into a thermoforming mold (39) equipped with cutting punches (41, 42),
- a step of thermoforming by closing the thermoforming mold (39) and applying a vacuum inside the thermoforming mold (39), so as to simultaneously perform during the same step a process of shaping the first cover (13.1) and the second cover (13.2), a process of heat sealing at least one edge of the first cover (13.1) and at least one edge of the second cover (13.2) to one another, a process of bonding the first cover (13.1) and the second cover (13.2) to the foam core (12), and a process of cutting the stacked structure (11) along its circumference by means of the cutting punches (41, 42).

2. The method according to claim 1, **characterized in that** prior to the local heating step said method comprises a step of placing at least one functional insert (15) to be mechanically linked to the stacked structure (11) during the thermoforming step.

3. The method according to claim 2, **characterized in that** the functional insert (15) is fixed in position on the heating frame (28) so as to guarantee correct positioning of said functional insert (15) relative to the stacked structure (11).

4. The method according to claim 1 or 2, **characterized in that** the step of locally heating the edge (29.1, 29.2, 30.1, 30.2) of the stacked structure (11) is started before the step of externally heating the entire stacked structure (11).

5. The method according to claim 1 or 2, **characterized in that** the step of locally heating the edge (29.1, 29.2, 30.1, 30.2) of the stacked structure (11) and the step of externally heating the entire stacked structure (11) are started at the same time.

6. The method according to claim 1 or 2, **characterized in that** the step of locally heating the edge (29.1, 29.2, 30.1, 30.2) of the stacked structure (11) is started when the external heating process is stabilized at a temperature level (P2).

7. The method according to any of the claims 1 to 5, **characterized in that** the step of externally heating the entire stacked structure (11) is carried out at two isothermal levels (P1, P2).

8. The method according to any of the claims 1 to 6, **characterized in that**, when a heating member (32) of the heating frame (28) has reached a temperature compatible with the processes of heat sealing and cutting an edge of the first cover (13.1) and an edge of the second cover (13.2) and when a temperature of a central part of the stacked structure (11) is homogeneous, the method comprises a step of stopping the external and local heating by means of the heating frame (28).

9. The method according to any of the claims 1 to 7, **characterized in that** it comprises a step of cooling the part (10) obtained during the thermoforming step in order to stabilize the processes of thermoforming the covers (13.1, 132.), bonding the covers (13.1, 13.2) to the foam core (12), and heat sealing the edges of the covers (13.1, 13.2) to one another.

10. The method according to claim 9, **characterized in that** the cooling step is carried out by impressions of the mold (39) stabilized at a temperature lower than a solidification temperature of a material of the covers (13.1, 13.2).

11. The method according to claim 9, **characterized in that** the cooling step is carried out by regulating the temperature of the mold (39) from a transformation temperature to a temperature lower than a solidification temperature of a material of the covers (13.1, 13.2).

12. The method according to any of the claims 1 to 11, **characterized in that** the external heating step is carried out by a dedicated external heating cell (36) or by impressions of the mold (39) in the open state.

13. A part for an aircraft seat obtained with the method as defined according to any of the preceding claims.

14. The part for an airplane seat according to claim 13, **characterized in that** it is chosen from a meal flap (10), a backrest, a seating pan, a headrest, or a privacy shell panel.
